# EUROPEAN PATENT APPLICATION

(11) **EP 3 123 907 A1**
(43) Date of publication of application: **01.02.2017**
(21) Application number: 15770160.8
(22) Date of filing: 23.03.2015
(51) Int. Cl.: A47J 27/00, A47J 36/00, A47J 43/28

(54) **AUTOMATIC COOKING DEVICE**

(30) Priority: 26.03.2014 CN 201420142231 U
(71) Applicant: Jiang, Keliang, Zhuhai, Guangdong 519000 (CN)
(72) Inventor: Jiang, Keliang, Zhuhai, Guangdong 519000 (CN)
(74) Representative: ZHAOffice SPRL
(86) International application number: PCT/CN2015/074853
(87) International publication number: WO 2015/144026

(57) **Abstract**

The present invention discloses an automatic cooking device (10), comprising a main machine (1), a pot body (2), a spatula (3), a spatula driving apparatus (4) and a blocking frame (5), wherein: a lower opening of a feed passage of the blocking frame (5) is jointed with a top opening of the pot body (2); the spatula (3) is configured to swing in a reciprocating manner between a first limit position and a second limit position by means of the drive of the spatula driving apparatus (4); the main machine (1) comprises a control box (11) and a frame (12); a pot mouth encircling edge (22) is provided along an edge of the top opening (21) of the pot body (2); at least one part of the pot mouth encircling edge (22) and a lower rim (52) of the blocking frame (5) form a slidable contact fit; and a protruding blocking part (233) is formed on the pot mouth encircling edge (22) at the periphery of the blocking frame (5), a top face of the blocking part (233) being higher than the joint seam between the pot mouth encircling edge (22) and the lower rim (52) of the blocking frame. The present invention further discloses another automatic cooking device (10), wherein: a main machine (1) of the automatic cooking device comprises a control box (11) and a frame (12); and an upper surface of the frame (12) is provided with a waste water trough (121), a water drainage hole (122) being arranged in the waste water trough (121), and the water drainage hole (122) being in communication with a waste water box (6).

## Description

### TECHNICAL FIELD

The present invention relates to a cooking device, and more particularly to an easy-to-clean automatic cooking device. This application claims the priority of the Chinese patent application No. 201420142231.1, entitled as "Automatic Cooking Device", filed to the Patent Office of the State Intellectual Property Office of China on March 26, 2014, which is incorporated by reference in its entirety.

### BACKGROUND ART

With an accelerated pace of life and the rise of the kitchen revolution, automated cooking devices have overwhelmingly become the mainstream. Microwave ovens, as common automated cooking devices, have been increasingly used. However, as imported goods, microwave ovens are much more suitable for foreigners' living habits. After being introduced into China, microwave ovens are substantially produced based on foreign technologies. Generally, Chinese consumers just use them to heat food. In recent years, although new models appear, restraints on the simple heating function of microwave ovens have not been broken yet.

For the above problems, some automatic cooking devices, also named as "automatic cooking machines", able to better meet Chinese people's living habits have appeared. An automatic cooking machine is a machine capable of professionally simulating human cooking without human supervision, and is also an intelligent automatic cooking device capable of automatically heating oil, stir-frying and controlling heat without any experience so long as prepared primary ingredients, secondary ingredients and seasonings are fed in one time and then programs are set. With the automatic cooking machine, automation and interest are realized in a cooking process, while realizing truly fume-free, time-saving, labor-saving, non-sticking and non-burning cooking. Thus, not only are traditional crafts and color of Chinese dishes maintained, but also the cooked dishes are fresh, delicious and nutritious.

However, through research, the inventor found that there are some problems common in those automatic cooking devices. For example, their structures are complex and even unreasonable, and dead corners for cleaning are likely to appear; juices seep out of a pot abnormally to soil device parts and external environment during normal use; and members requiring cleaning are hard to identify, assemble and dissemble, resulting in inconvenience or even difficulty in cleaning.

### SUMMARY

One object of the present invention is to provide an automatic cooking device capable of effectively preventing juice seeping and dead corners for cleaning and easy to disassemble, assemble and clean to overcome the deficiencies in the prior art.

Another object of the present invention is to provide an automatic cooking device capable of automatically collecting waste water to keep the surface of the device clean and reduce the cleaning workload.

To achieve the above first object, the present invention adopts the following technical solution: there is designed an automatic cooking device comprising a main machine, a pot body, a spatula, a spatula driving apparatus and a blocking frame located above the pot body, wherein: the blocking frame is provided with a feed passage with an upper opening and a lower opening; the lower opening of the feed passage is jointed with a top opening of the pot body; the spatula is located in a cavity encircled by the blocking frame and the pot body, is configured to swing in a reciprocating manner between a first limit position and a second limit position by means of the drive of the spatula driving apparatus, and is provided with a working face which is opposite to a cooking face of the pot body and complementary with the cooking face in shape; the main machine comprises a control box and a frame; a pot mouth encircling edge is provided along an edge of the top opening of the pot body, and at least one part of the pot mouth encircling edge and a lower rim of the blocking frame form a slidable contact fit; and a protruding blocking part is formed on the pot mouth encircling edge at the periphery of the blocking frame, and a top face of the blocking part is higher than the joint seam between the pot mouth encircling edge and the lower rim of the blocking frame.

It can be seen from the above solution that in the automatic cooking device provided by the present invention, as the lower rim of the blocking frame and the pot mouth encircling edge form a slidable contact fit, juices generated in a cooking process is unlikely to seep out of the joint seam between the blocking frame and the pot body. Meanwhile, as the protruding blocking part is formed on the pot mouth encircling edge at the periphery of the blocking frame, and the top face of the blocking part is higher than the joint seam between the pot mouth encircling edge and the lower rim of the blocking frame, even some juices seep out of the joint seam, the blocking part still can effectively block the juices to prevent the juices from flowing outside the blocking frame and the pot body to soil the device, thus reducing the cleaning workload. Moreover, the juices are prevented from sticking and hanging on an outer surface of the pot body to avoid a condition that the juices fall down on the kitchen countertop and the floor when the pot body is moved out of the main machine.

Preferably, after the blocking frame is detachably placed in the frame, the lower rim of the blocking frame and the pot mouth encircling edge form a slidable contact fit.

Further, an upper surface of the frame is provided with a waste water trough, and a water drainage hole is arranged in the waste water trough and is in communication with a waste water box. By adopting the above design, distilled water and other dirt gathered in the waste water trough may flow to the waste water box via the water drainage hole, so that waste water is collected automatically, the surface of the frame is kept clean, and the cleaning workload is reduced.

Further, a pot cover is arranged on the frame, and the pot cover is provided with a closed state when placed horizontally at the top of the frame and an open state when placed vertically at the top of the frame. During normal cooking, there is distilled water on the inner surface of the pot cover; if the pot cover is placed on the table board, the distilled water will flow onto the table board to soil the table board; if the pot cover is vertically placed at the top of the frame, there is no need to place the pot cover on the kitchen countertop randomly, so that the kitchen countertop is prevented from being soiled.

Further, a blocking frame flange is arranged on an upper rim of the blocking frame; and when the pot cover, vertically placed at the top of the frame, is in the open state, an inner rim of the pot cover is in contact with a lower rim of the blocking frame flange, and an outer surface of the pot cover is in contact with an outer rim of the waste water trough. Through the above design, not only can the pot cover be vertically placed at the top of the frame stably, but also in a process of switching the horizontally placed pot cover in the closed state to the vertically placed pot cover in the open state, the distilled water on the inner surface of the pot cover flows to the waste water trough on the upper surface of the frame, thus preventing the distilled water from flowing randomly.

Further, hangers are arranged at the lower part of the frame and configured to support the pot body, and a lower surface of the pot mouth encircling edge and a supporting surface of the hangers form a slidable fit. With this structure, a user can conveniently draw the pot body out of or push the pot body into the main machine horizontally. Meanwhile, the possibility that the hangers are in contact with dirty water is reduced, and the hangers may avoid influence on cleaning of the spatula and the blocking frame to the greatest extent.

Preferably, the upper opening of the feed passage is larger than or equal to the lower opening of the feed passage, so that sectional areas of the feed passage keep constant or become smaller and smaller from the upper opening to the lower opening of the feed passage.

Preferably, an inner surface of the blocking frame comprises a vertical plane, an outwardly inclined plane, an evaginable camber surface or an outwardly-folded combined plane.

It can be seen from the above solution that if a user overlooks the upper opening of the blocking frame, he/she can see the entire inner surface of the blocking frame, and a cleaning tool can easily reach the entire inner surface, so that the cleaning is convenient and dirty dead corners are unlikely to be left.

Further, the automatic cooking device provided by the present invention comprises the waste water box which is detachably connected to the main machine and arranged below the pot body. The waste water box is mainly used for collecting waste water when the device is cleaned on any kitchen countertop.

Further, a lower part of the main machine is connected with a support for allowing the main machine to be stably placed during use or cleaning and/or for supporting the waste water box. Through the support, not only are the overall stationarity and strength of the device ensured, but also cleaning of the device on a sink is convenient; and if the waste water box is arranged, the support can also be used for supporting the waste water box.

Further, the blocking part is arranged along an outer horizontal edge and two vertical edges of the pot mouth encircling edge. With such design, the pot body may be pushed and drawn smoothly, and is prevented from being blocked by the blocking frame in a pushing/drawing process.

Further, when swinging to the first limit position and/or the second limit position, the spatula is located above the top opening of the pot body. Here, the pot body may be drawn out of the machine body in a slidable manner for pouring out of dishes and cleaning when separated from the main machine. Meanwhile, there is no block on the spatula, so it is convenient to clean.

To achieve the above second object, the present invention adopts the following technical solution: there is an automatic cooking device comprising a main machine, a pot body, a spatula, a spatula driving apparatus and a blocking frame located above the pot body, wherein: the blocking frame is provided with a feed passage with an upper opening and a lower opening; the lower opening of the feed passage is jointed with a top opening of the pot body; the spatula is located in a cavity encircled by the blocking frame and the pot body, is configured to swing in a reciprocating manner between a first limit position and a second limit position by means of the drive of the spatula driving apparatus, and is provided with a working face which is opposite to a cooking face of the pot body and complementary with the cooking face in shape; the main machine comprises a control box and a frame; an upper surface of the frame is provided with a waste water trough; a water drainage hole is arranged in the waste water trough; and the water drainage hole is in communication with a waste water box.

It can be seen from the above solution that as the upper surface of the frame is provided with the waste water trough, the waste water can be automatically collected; and distilled water and other dirt gathered in the waste water trough may flow to the waste water box via the water drainage hole, so that the surface of the frame is kept clean, and the cleaning workload is reduced.

Further, a pot cover is arranged on the frame, and the pot cover is provided with a closed state when placed horizontally at the top of the frame and an open state when placed vertically at the top of the frame. During normal cooking, there is distilled water on the inner surface of the pot cover; if the pot cover is placed on the kitchen countertop, the distilled water will flow onto the kitchen countertop to soil the kitchen countertop; if the pot cover is vertically placed at the top of the frame, there is no need to place the pot cover on the kitchen countertop randomly, so that the kitchen countertop is prevented from being soiled.

Further, a blocking frame flange is arranged on an upper rim of the blocking frame; and when the pot cover, vertically placed at the top of the frame, is in the open state, an inner rim of the pot cover is in contact with a lower rim of the blocking frame flange, and an outer surface of the pot cover is in contact with an outer rim the waste water trough. Through the above design, not only can the pot cover be vertically placed at the top of the frame stably, but also in a process of switching the horizontally placed pot cover in the closed state to the vertically placed pot cover in the open state, the distilled water on the inner surface of the pot cover flows to the waste water trough on the upper surface of the frame, thus preventing the distilled water from flowing randomly.

Further, a pot mouth encircling edge is provided along an edge of the top opening of the pot body, and at least one part of the pot mouth encircling edge and a lower rim of the blocking frame form a slidable contact fit. A protruding blocking part is formed on the pot mouth encircling edge at the periphery of the blocking frame, and a top face of the blocking part is higher than the joint seam between the pot mouth encircling edge and the lower rim of the blocking frame.

It can be seen from the above solution that as the lower rim of the blocking frame and the pot mouth encircling edge form a slidable contact fit, juices generated in a cooking process is unlikely to seep out of the joint seam between the blocking frame and the pot body. Meanwhile, as the protruding blocking part is formed on the pot mouth encircling edge at the periphery of the blocking frame, and the top face of the blocking part is higher than the joint seam between the pot mouth encircling edge and the lower rim of the blocking frame, even some juices seep out of the joint seam, the blocking part still can effectively block the few of juices to prevent the juices from flowing outside the blocking frame and the pot body to soil the device, thus reducing the cleaning workload. Moreover, the juices are prevented from sticking and hanging on an outer surface of the pot body to avoid a condition that the juices fall down on a kitchen countertop and a floor when the pot body is moved out of the main machine.

Further, hangers are arranged at the lower part of the frame and configured to support the pot body, and a lower surface of the pot mouth encircling edge and a supporting surface of the hangers form a slidable fit. With this structure, a user can conveniently draw the pot body out of or push the pot body into the main machine horizontally. Meanwhile, the possibility that the hangers are in contact with dirty water is reduced, and the hangers may avoid influence on cleaning of the spatula and the blocking frame to the greatest extent.

Preferably, the upper opening of the feed passage is larger than or equal to the lower opening of the feed passage, so that sectional areas of the feed passage keep constant or become smaller and smaller from the upper opening to the lower opening of the feed passage.

Preferably, an inner surface of the blocking frame comprises a vertical plane, an outwardly inclined plane, an evaginable camber surface or an outwardly-folded combined plane.

It can be seen from the above solution that if a user overlooks the upper opening of the blocking frame, he/she can see the entire inner surface of the blocking frame, and a cleaning tool can easily reach the entire inner surface, so that the cleaning is convenient and dirty dead corners are unlikely to be left.

Further, the automatic cooking device provided by the present invention comprises the waste water box which is detachably connected to the main machine and arranged below the pot body. The waste water box is mainly used for collecting waste water when the device is cleaned on any kitchen countertop.

Further, a lower part of the main machine is connected with a support for allowing the main machine to be stably placed during use or cleaning and/or supporting the waste water box. Through the support, not only are the overall stationarity and strength of the device ensured, but also cleaning of the device on a sink is convenient. If the waste water box is arranged, the support can also be used for supporting the waste water box.

Further, the blocking part is arranged along an outer horizontal edge and two vertical edges of the pot mouth encircling edge. With such design, the pot body may be pushed and drawn smoothly, and is prevented from being blocked by the blocking frame in a pushing/drawing process.

Further, when swinging to the first limit position and/or the second limit position, the spatula is located above the top opening of the pot body. Here, the pot body may be drawn out of the machine body in a slidable manner for pouring out dishes and cleaning when separated from the main machine. Meanwhile, there is no block on the spatula, so it is convenient to clean.

In conclusion, compared with the prior art, the automatic cooking device provided by the present invention is simple in structure, convenient to use and easy to clean.

### BRIEF DESCRIPTION OF THE DRAWINGS

Figure 1 shows a perspective view of an automatic cooking device according to an embodiment of the present invention.
Figure 2 shows a perspective view of the automatic cooking device shown in Figure 1 without a pot cover.
Figure 3 shows an exploded view of the automatic cooking device shown in Figure 2.

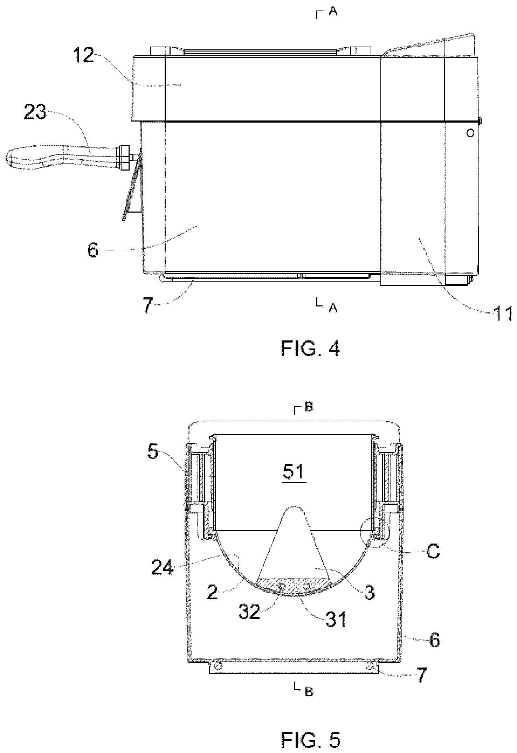

Figure 4 shows a side view of the automatic cooking device shown in Figure 2.
Figure 5 shows an A-A sectional view of a spatula, swinging to a middle position, of the automatic cooking device shown in Figure 2.
Figure 6 shows an A-A sectional view of the spatula, swinging to a first limit position, of the automatic cooking device shown in Figure 2.
Figure 7 shows an A-A sectional view of the spatula, swinging to a second limit position, of the automatic cooking device shown in Figure 2.

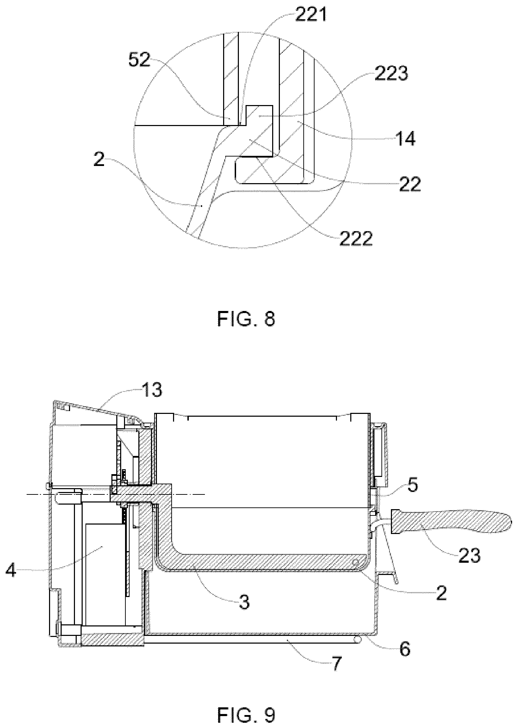

Figure 8 shows a partial enlarged view of a position C shown in Figure 5.
Figure 9 shows a B-B sectional view of the automatic cooking device shown in Figure 5.
Figure 10 shows a perspective view of the automatic cooking device when the pot cover is vertically placed at the top of a frame according to an embodiment of the present invention.
Figure 11 shows a sectional view of the automatic cooking device shown in Figure 10.
Figure 12 shows a schematic drawing of a first cleaning state of the automatic cooking device provided by the present invention.
Figure 13 shows a schematic drawing of a second cleaning state of the automatic cooking device provided by the present invention.
Figure 14 shows a schematic drawing of a third cleaning state of the automatic cooking device provided by the present invention.

### DETAILED DESCRIPTION

Various embodiments of the present invention will be described in detail herein, and the embodiments are explained with reference to the accompanying drawings. Although the present invention is explained in combination with the exemplary embodiments, it should be understood that the present invention is not limited to these exemplary embodiments. Instead, the present invention comprises not only these embodiments, but also various modifications and improvements thereof.

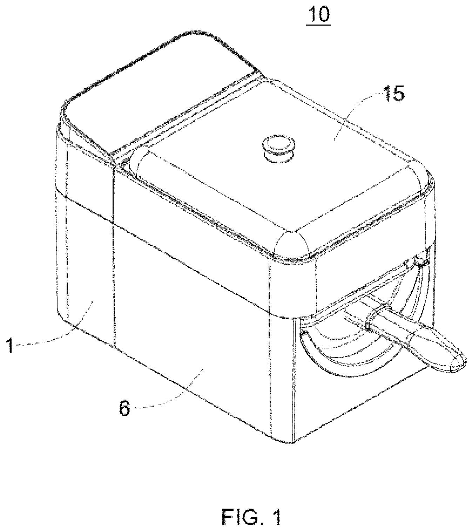

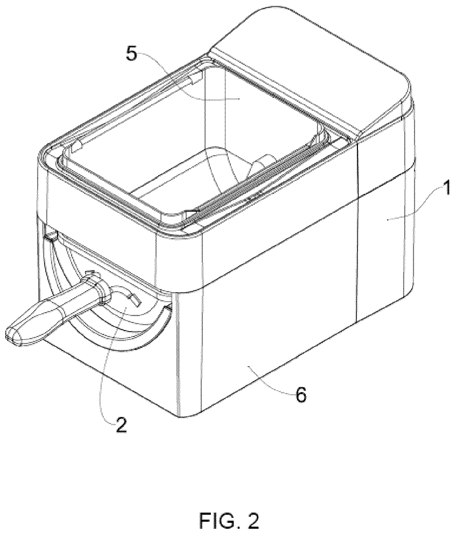

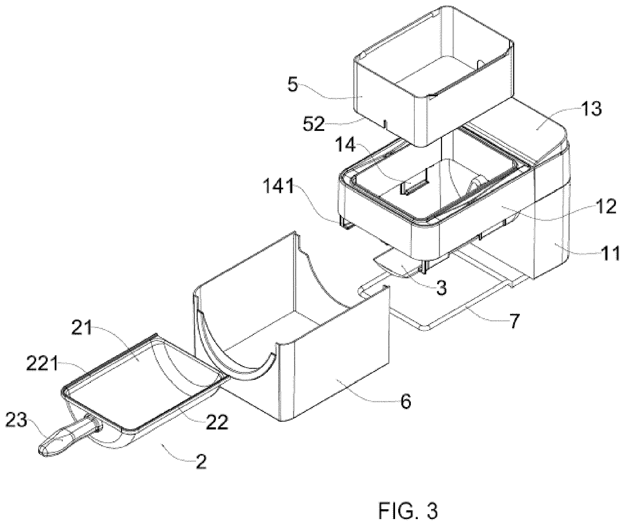

As shown in Figures 1-3, an automatic cooking device 10 according to an embodiment of the present invention comprises a main machine 1, a pot body 2, a spatula 3, a spatula driving apparatus 4, a blocking frame 5, a waste water box 6, a support 7, a pot cover 15 and a microcomputer control unit, wherein the waste water box 6 is detachably connected to the main machine 1 to form a substantially cuboid box body. When connected to the main machine 1, the waste water box 6 is located below the pot body 2 and supported by the support 7 below the waste water box. The support 7 is horizontally connected and fixed to the main machine 1. In the present embodiment, the support 7 is a U-shaped wire frame. Through the support 7, not only are the overall stationarity and strength of the device ensured, but also cleaning of the device on a sink is convenient. The waste water box 6 is mainly used for collecting waste water when the device is directly placed on a kitchen countertop to be cleaned.

The main machine 1 is composed of a control box 11 and a frame 12 horizontally extending outwards from the upper part of the control box 11; a pot cover 15 is arranged at the top of the frame 12; the top face of the control box 11 is provided with a control panel 13; and the control panel 13 may be an LCD touch panel integrating display and control, and may adopt a button, a knob, an indicating lamp or the like to set functions and display working states.

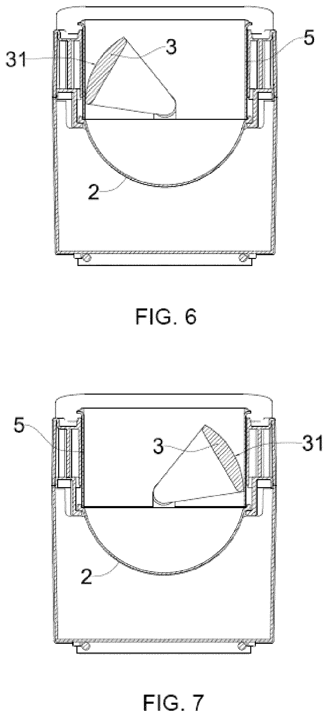

The spatula 3 may be pivotally supported on the frame 12, and the whole spatula 3 is located in a cavity encircled by the blocking frame 5 and the pot body 2. The spatula driving apparatus 4 and the spatula 3 form a drivable connection. The spatula driving apparatus 4 and the microcomputer control unit (not shown in the Figures) are arranged in the control box 11, and the spatula driving apparatus 4 can receive an instruction from the microcomputer control unit to drive the spatula 3 to swing in a reciprocating manner between a first limit position shown in Figure 6 and a second limit position shown in Figure 7. The spatula driving apparatus 4 may be a driving motor, and is connected with the spatula 3 via a crank-rocker mechanism and a gear transmission mechanism. Of course, the spatula driving apparatus 4 may employ other driving manners so long as the spatula 3 is driven to swing in a reciprocating manner between the two limit positions. An electric heating element 32 controlled by the microcomputer control unit is arranged inside the spatula 3, and is used for heating the spatula 3 to suitable temperatures according to specific cooking needs.

Two sides of the frame 12 extend downwards and are provided with two hangers 14 for supporting the pot body 2 respectively. The pot body 2 is supported on a supporting surface 141 of the hangers 14. The blocking frame 5 is detachably placed in the frame 12 of the main machine 1 to enable the blocking frame to be conveniently taken out for cleaning. When the blocking frame 5 is placed in the frame 12, a lower rim of the blocking frame 5 and a pot mouth encircling edge 22 which will be referred to below form a slidable contact fit.

The pot body 2 is a substantially semi-cylindrical metal housing; a handle 23 is arranged at an outer end of the pot body 2; the top of the pot body 2 is provided with an opening 21; the pot mouth encircling edge 22 is arranged along the edge of the top opening 21; and the inner surface of the pot body 2 is a cooking face 24. A user can draw out of or push in the pot body 2 in the horizontal direction via the handle 23. In a process that the pot body 2 is moved in the horizontal direction, a lower surface 222 of the pot mouth encircling edge 22 and the supporting surface 141 of the hangers 14 form a slidable fit.

In the present embodiment, the blocking frame 5 is a rectangular frame. The feed passage 51 with an upper opening and a lower opening is arranged inside the blocking frame, and the upper opening and the lower opening of the feed passage are basically the same. The lower opening of the feed passage 51 is jointed with the top opening 21 of the pot body 2. The spatula 3 is provided with a working face 31 which is opposite to the cooking face 24 of the pot body 2 and complementary with the cooking face in shape. The lower rim 52 of the blocking frame 5 and an inside top face 221 of the pot mouth encircling edge 22 form a slidable contact fit. A protruding blocking part 223 is formed on the pot mouth encircling edge 22 at the periphery of the blocking frame 5. A top face of the blocking part 223 is higher than the joint seam between the pot mouth encircling edge 22 and the lower rim 52 of the blocking frame; and that is, the top face of the blocking part is higher than a lower end face of the blocking frame 5. The blocking part 223 is arranged along an outer horizontal edge and two vertical edges of the pot mouth encircling edge 22. That is, the blocking part 223 is not arranged on an inside horizontal edge of the pot mouth encircling edge 22. With such design, the pot body 2 may be pushed and drawn smoothly, and is prevented from being blocked by the blocking frame 5 in a pushing/drawing process.

As the lower rim 52 of the blocking frame 5 and the inside top face 221 of the pot mouth encircling edge 22 form a slidable contact fit, juices generated in a cooking process is unlikely to seep out of the joint seam between the blocking frame 5 and the pot body 2. As the protruding blocking part 223 is formed on the pot mouth encircling edge 22 at the periphery of the blocking frame 5, and the top face of the blocking part 223 is higher than the joint seam between the pot mouth encircling edge 22 and the lower rim 52 of the blocking frame, even some juices seep out of the joint seam, the blocking part 223 still can effectively block the few juices to prevent the juices from flowing outside the blocking frame 5 and the pot body 2 to soil the device, thus reducing the cleaning workload. Therefore, the juices are prevented from sticking and hanging on an outer surface of the pot body 2 to avoid a condition that the juices fall down on a kitchen countertop and a floor when the pot body is moved out of the main machine 1.

In the present embodiment, since the blocking frame 5 is a rectangular frame with an upper opening and a lower opening which are basically the same, the inner surface of the blocking frame includes four vertical planes. The sectional areas of the feed passage 51 from the upper opening to the lower opening of the feed passage are constant. Of course, the blocking frame 5 may adopt other shapes. For example, the inner surface of the blocking frame may comprise an outwardly inclined plane, an evaginable camber surface or an outwardly-folded combined plane. Correspondingly, the sectional areas of the feed passage become smaller and smaller from the upper opening to the lower opening. With the blocking frame 5 adopting the above structure, if a user overlooks the upper opening of the blocking frame 5, he/she can see the entire inner surface of the blocking frame, and a cleaning tool can easily reach the entire inner surface, so that the cleaning is convenient and dirty dead corners are unlikely to be left.

When swinging to the first limit position shown in Figure 6 and/or the second limit position shown in Figure 7, the spatula 3 is located above the top opening 21 of the pot body 2, and a working face 31 of the spatula is located between the top opening 21 and the upper opening of the feed passage 51 in the height direction. Here, the pot body 2 may be drawn out of the machine body in a slidable manner for pouring out of dishes and cleaning when separated from the main machine 1. Meanwhile, there is no block on the spatula 3, so it is convenient to clean.

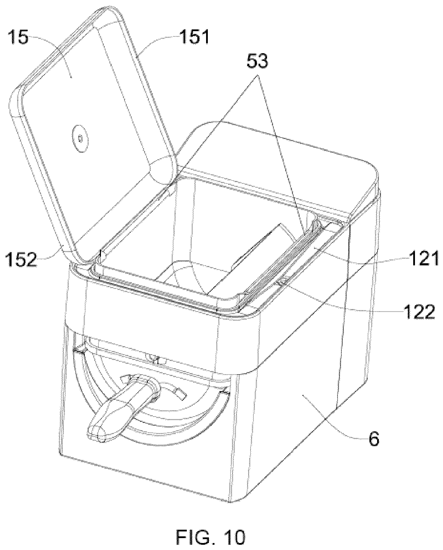

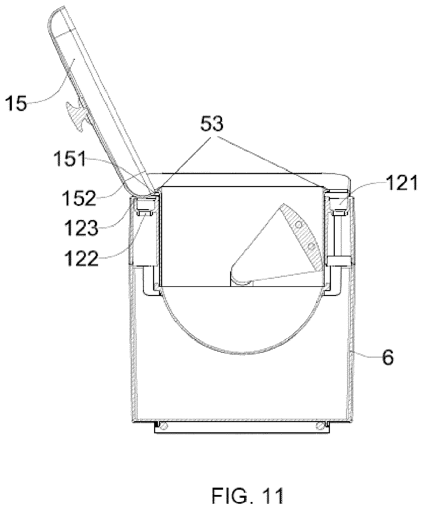

Figures 10 and 11 respectively show an automatic cooking device according to another embodiment of the present invention. The structure of the automatic cooking device is basically similar to that of the automatic cooking device 10 shown in Figure 1. However, in the present embodiment, arranging a protruding blocking part on a pot mouth encircling edge is only a preferred embodiment, but is not required. As shown in Figures 10 and 11, a circle of waste water trough 121 is arranged on an upper surface of the frame 12, and a water drainage hole 122 is arranged in the waste water trough 121 and is in communication with a waste water box 6. In addition, a blocking frame flange 53 is arranged on an upper rim of a blocking frame 5. When turned over, a pot cover 15 may be vertically placed at the top of the frame 12. The term "vertically placed" mentioned herein indicates that an included angel between a plane of the pot cover 15 and the horizontal plane is obviously greater than that between the plane of the pot cover 15 and the vertical plane, but is not limited to "vertical" in the strict sense. Here, an inner rim 151 of the pot cover 15 is in contact with a lower rim of the blocking frame flange 53, and an outer surface 152 of the pot cover 15 is in contact with an outer rim 123 of the waste water trough of the frame 12, so that the pot cover 15 can be placed stably. By applying this design, the automatic cooking device provided by the present invention has the following beneficial effects: 1) during normal cooking, there is distilled water on the inner surface of the pot cover 15; if the pot cover 15 is placed on the kitchen countertop, the distilled water will flow onto the kitchen countertop to soil the kitchen countertop; if the pot cover 15 is vertically placed at the top of the frame 12, there is no need to place the pot cover 15 on the kitchen countertop randomly, so that the kitchen countertop is prevented from being soiled; 2) in a process from the horizontally placed pot cover 15 in the closed state to the vertically placed pot cover in the open state, the distilled water on the inner surface of the pot cover 15 flows to the waste water trough 121 on the upper surface of the frame 12, thus preventing the distilled water from flowing randomly; and 3) distilled water and other dirt gathered in the waste water trough 121 may flow to the waste water box 6 via the water drainage hole 122, so that waste water is collected automatically, the surface of the frame 12 is kept clean, and the cleaning workload is reduced.

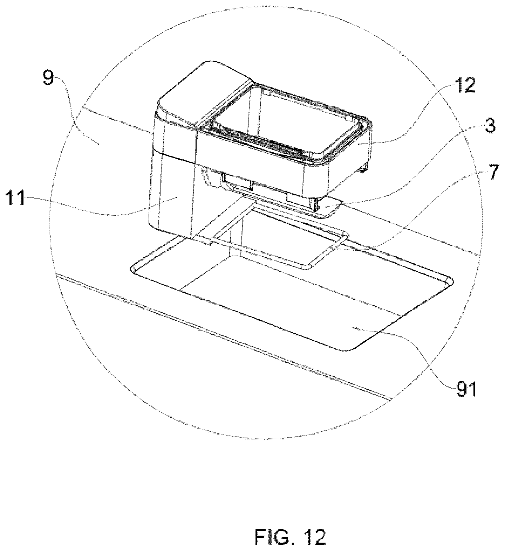

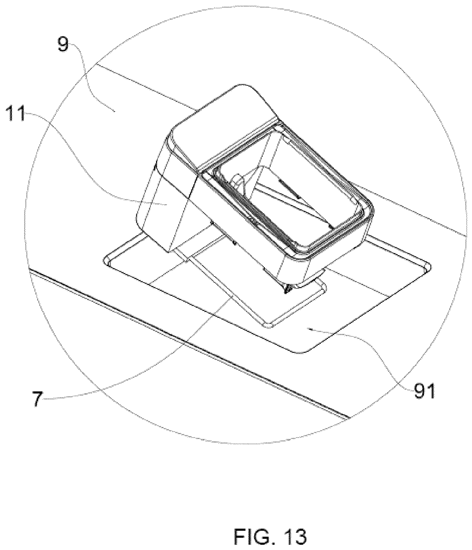

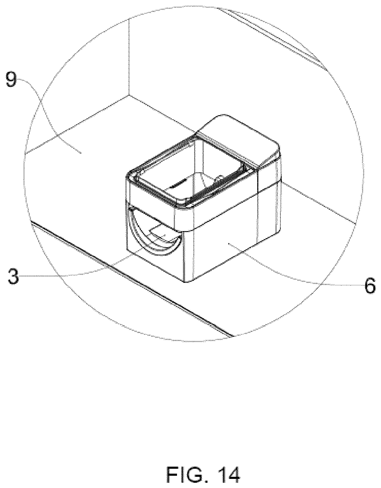

When the automatic cooking device 10 provided by the present invention is cleaned, as shown in Figure 12, at first, the blocking frame 5, the pot body 2 and the waste water box 6 are separately dismantled from the main machine 1. Then, the bottom of the control box 11 of the main machine 1 is horizontally placed on a kitchen countertop 9, the support 7 is hung above a sink 91, and the whole automatic cooking device 10 is horizontally placed. At the moment, a faucet is opened to directly clean the frame 12, the spatula 3 and the like, or the frame and the spatula are cleaned by a water-dipped tool. At last, waste water directly falls to the sink to be discharged. In addition, as shown in Figure 13, the bottom of the control box 11 leans on an upper rim of the sink 91, the support 7 leans at the bottom of the sink 91, and the whole automatic cooking device 10 is aslant placed. At the moment, the faucet is opened to directly clean the frame 12, the spatula 3 and the like, or the frame and the spatula are cleaned by the water-dipped tool. At last, waste water directly falls to the water trough to be discharged. Generally, an implementation manner shown in Figure 14 is adopted. In this implementation manner, the whole automatic cooking device 10 is horizontally placed on any kitchen countertop. After the pot body 2 is taken out, the blocking frame 5, the spatula 3 and the like are washed via the water-dipped tool. Or, during the interval of cooking, few of vegetable residues stuck on the blocking frame 5 and the spatula 3 are pushed to the waste water box 6 via a tool to be stored temporarily for continuing next cooking. If the pot body 2 is not taken out, water may be added into the pot body 2 to soak the spatula 3, and then the pot body and the spatula are cleaned via a cleaning tool.

Of course, the above-described embodiments are only the preferred embodiments of the present invention, and the technical features of the different embodiments can be combined and shared with one another. In practical application, the present invention may have more changes, but is not limited to the embodiments described above. For example, the pot body 2 may be hemispherical or takes other appropriate shapes, and may be made of ceramics or other appropriate materials. The support 7 may be slab-shaped or mesh-shaped, or may have other shapes. Such changes can also achieve the objects of the present invention, so they are within the protection scope of the present invention as claimed in claims.

### INDUSTRIAL APPLICABILITY

The automatic cooking device provided by the present invention may be manufactured and used in the field of industry, and has the industrial applicability.

## Claims

1. An automatic cooking device, comprising a main machine, a pot body, a spatula, a spatula driving apparatus and a blocking frame located above the pot body, wherein:
the blocking frame is provided with a feed passage with an upper opening and a lower opening; the lower opening of the feed passage is jointed with a top opening of the pot body; the spatula is located in a cavity encircled by the blocking frame and the pot body,
is configured to swing in a reciprocating manner between a first limit position and a second limit position by means of the drive of the spatula driving apparatus, and is provided with a working face which is opposite to a cooking face of the pot body and
complementary with the cooking face in shape; the main machine comprises a control box and a frame; a pot mouth encircling edge is provided along an edge of the top opening of the pot body; at least one part of the pot mouth encircling edge and a lower rim of the blocking frame form a slidable contact fit; a protruding blocking part is formed on the pot mouth encircling edge at the periphery of the blocking frame; and a top face of the blocking part is higher than a joint seam between the pot mouth encircling edge and the lower rim of the blocking frame.

2. The automatic cooking device of claim 1, wherein after the blocking frame is detachably placed in the frame, the lower rim of the blocking frame and the pot mouth encircling edge form a slidable contact fit.

3. The automatic cooking device of claim 1, wherein an upper surface of the frame is provided with a waste water trough, a water drainage hole being arranged in the waste water trough and in communication with a waste water box.

4. The automatic cooking device of claim 3, wherein a pot cover is further arranged on the frame, the pot cover having a closed state when placed horizontally at the top of the frame and an open state when placed vertically at the top of the frame.

5. The automatic cooking device of claim 4, wherein a blocking frame flange is arranged on an upper rim of the blocking frame; and when the pot cover, vertically placed at the top of the frame, is in the open state, an inner rim of the pot cover is in contact with a lower rim of the blocking frame flange, and an outer surface of the pot cover is in contact with an outer rim of the waste water trough.

6. The automatic cooking device of claim 1, wherein hangers are arranged at a lower part of the frame and configured to support the pot body, and a lower surface of the pot mouth encircling edge and a supporting surface of the hangers form a slidable fit.

7. The automatic cooking device of claim 1, wherein the upper opening of the feed passage is larger than or equal to the lower opening of the feed passage, so that sectional areas of the feed passage keep constant or become smaller and smaller from the upper opening to the lower opening of the feed passage.

8. The automatic cooking device of claim 1, wherein an inner surface of the blocking frame comprises a vertical plane, an outwardly inclined plane, an evaginable camber surface or an outwardly-folded combined plane.

9. The automatic cooking device of claim 1, further comprising a waste water box which is detachably connected to the main machine and arranged below the pot body.

10. The automatic cooking device of claim 1, wherein a lower part of the main machine is connected with a support used for allowing the main machine to be stably placed during use or cleaning and/or for supporting the waste water box.

11. The automatic cooking device of claim 1, wherein the blocking part is arranged along an outer horizontal edge and two vertical edges of the pot mouth encircling edge.

12. The automatic cooking device of claim 1, wherein when swinging to the first limit position and/or the second limit position, the spatula is located above the top opening of the pot body.

13. An automatic cooking device, comprising a main machine, a pot body, a spatula, a spatula driving apparatus and a blocking frame located above the pot body, wherein:
the blocking frame is provided with a feed passage with an upper opening and a lower opening; the lower opening of the feed passage is jointed with a top opening of the pot body; the spatula is located in a cavity encircled by the blocking frame and the pot body,
is configured to swing in a reciprocating manner between a first limit position and a second limit position by means of the drive of the spatula driving apparatus, and is provided with a working face which is opposite to a cooking face of the pot body and complementary with the cooking face in shape; the main machine comprises a control box and a frame; an upper surface of the frame is provided with a waste water trough;
and a water drainage hole is arranged in the waste water trough and is in communication with a waste water box.

14. The automatic cooking device of claim 13, wherein a pot cover is further arranged on the frame, the pot cover having a closed state when placed horizontally at the top of the frame and an open state when placed vertically at the top of the frame.

15. The automatic cooking device of claim 14, wherein a blocking frame flange is arranged on an upper rim of the blocking frame; and when the pot cover, vertically placed at the top of the frame, is in the open state, an inner rim of the pot cover is in contact with a lower rim of the blocking frame flange, and an outer surface of the pot cover is in contact with an outer rim of the waste water trough.
